# EUROPEAN PATENT APPLICATION

(11) **EP 4 675 740 A1**
(43) Date of publication of application: **07.01.2026**
(21) Application number: 24763569.1
(22) Date of filing: 08.02.2024
(51) Int. Cl.: H01M 10/058, H01M 10/052, H01M 10/0568, H01M 10/0587, H01M 50/463, H01M 50/474, H01M 50/477

(54) **LITHIUM SECONDARY BATTERY**

(30) Priority: 28.02.2023 JP 2023030169
(71) Applicant: Panasonic Intellectual Property Management Co., Ltd., Kadoma-shi, Osaka 571-0057 (JP)
(72) Inventor: SADAKANE, Takuya, Kadoma-shi, Osaka 571-0057 (JP)
(74) Representative: Novagraaf International SA
(86) International application number: PCT/JP2024/004369
(87) International publication number: WO 2024/181085

(57) **Abstract**

A lithium secondary battery includes a positive electrode, a negative electrode, a separator, a spacer, and a nonaqueous electrolyte. The separator is disposed between the positive electrode and the negative electrode, and the spacer is arranged between at least one of the positive electrode and the negative electrode and the separator. At the negative electrode, lithium metal deposits during charging, and the lithium metal dissolves during discharging, the spacer has a plurality of linear portions. The separator has an elongated shape having a length L1 in a first direction, and a length L2 in a second direction perpendicular to the first direction, where L1 > L2, and an angle θ of the plurality of linear portions with respect to the first direction, where θ ≤ π/2, satisfies θ ≥ tan⁻¹(L2/L1).

## Description

### [Cross Reference to Related Application]

The present disclosure claims priority with respect to the Japanese Patent Application No. 2023-030169 filed on February 28, 2023, and the entire content of the patent application is incorporated herein by reference into the present specification.

### [Technical Field]

The present disclosure relates to a lithium secondary battery.

### [Background Art]

Lithium-ion batteries have been known as high-capacity nonaqueous electrolyte secondary batteries. As high-capacity nonaqueous electrolyte secondary batteries superior to lithium-ion batteries, lithium secondary batteries (lithium-metal secondary batteries) are promising. In a lithium secondary battery, during charging, lithium metal deposits on the negative electrode, and the lithium metal dissolves during discharging, to be released as lithium ions in the nonaqueous electrolyte.

In a lithium secondary battery, in which lithium metal deposits on the negative electrode during charging, it is necessary to ensure a space for lithium to deposit, by providing a spacer between the separator and the electrode.

Patent Literature 1 proposes "a lithium secondary battery, comprising: an electrode group in which a positive electrode, a negative electrode, and a separator interposed between the positive electrode and the negative electrode are wound together; and a nonaqueous electrolyte with lithium ion conductivity, wherein: the negative electrode includes a negative electrode current collector; the negative electrode current collector includes a layer having a first surface facing outward of the winding of the electrode group, and a second surface facing inward of the winding of the electrode group; a plurality of first protruding portions protruding from the first surface; and a plurality of second protruding portions protruding from the second surface; lithium metal deposits on the first surface and the second surface during charging; and a second average height of the plurality of second protruding portions is higher than a first average height of the plurality of first protruding portions."

Patent Literature 2 proposes "a lithium secondary battery, comprising: a positive electrode including a positive electrode active material containing lithium; a negative electrode including a negative electrode collector having a surface on which lithium metal deposits in a charged state; a separator disposed between the positive electrode and the negative electrode; and a nonaqueous electrolyte solution having lithium ion conductivity filled between the positive electrode and the negative electrode, wherein: the negative electrode collector includes a plurality of projections protruding from the surface toward the separator; and on the surface of the negative electrode collector, no projection is present on a line from a first end, through a region extending between the plurality of projections, to a second end opposite to the first end."

### [Citation List]

### [Patent Literature]

Patent Literature 1: Japanese Laid-Open Patent Publication No. 2019-160776
Patent Literature 2: Japanese Laid-Open Patent Publication No. 2018-195572

### [Summary of Invention]

### [Technical Problem]

In a lithium secondary battery (lithium-metal secondary battery), in which lithium metal deposits during charging in the space formed by a spacer, and the lithium metal dissolves during discharging, because of its high energy density, it is desirable to design the spacer from the viewpoint of enhancing the safety sufficiently.

### [Solution to Problem]

One aspect of the present disclosure relates to a lithium secondary battery, including a positive electrode, a negative electrode, a separator, a spacer, and a nonaqueous electrolyte, wherein the separator is disposed between the positive electrode and the negative electrode, the spacer is arranged between at least one of the positive electrode and the negative electrode and the separator, at the negative electrode, lithium metal deposits during charging, and the lithium metal dissolves into the nonaqueous electrolyte during discharging, the spacer has a plurality of linear portions, the separator has an elongated shape having a length L1 in a first direction, and a length L2 in a second direction perpendicular to the first direction, where L1 > L2, and an angle θ of the plurality of linear portions with respect to the first direction, where θ ≤ π/2, satisfies θ ≥ tan⁻¹(L2/L1).

### [Advantageous Effects of Invention]

According to the above configuration, it is possible to enhance the safety of the lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A diagram showing a separator with an elongated shape having a length L1 in a first direction D1 and a length L2 in a second direction D2, where L1 > L2, and a relationship between an angle θ of a plurality of linear portions with respect to the first direction D1, and tan⁻¹(L2/L1).
[FIG. 2] A schematic longitudinal sectional view of an example of a lithium secondary battery according to an embodiment of the present disclosure.
[FIG. 3] A schematic partial sectional view of the lithium secondary battery of FIG. 2.
[FIG. 4] A plan view of a plurality of linear portions constituting a spacer of the lithium secondary battery of FIG. 2.
[FIG. 5] A plan view of a plurality of linear portions constituting another spacer.
[FIG. 6] A plan view of a plurality of linear portions constituting yet another spacer.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "the numerical value A or more and the numerical value B or less". In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

### (Lithium secondary battery)

A lithium secondary battery according to an embodiment of the present disclosure includes a positive electrode, a negative electrode, a separator, a spacer, and a nonaqueous electrolyte. The separator is disposed between the positive electrode and the negative electrode. The spacer is arranged between at least one of the positive electrode and the negative electrode and the separator. The nonaqueous electrolyte has lithium ion conductivity.

At the negative electrode, lithium metal deposits during charging, and the lithium metal dissolves into the nonaqueous electrolyte during discharging. Specifically, the negative electrode has at least a negative electrode current collector, and lithium metal deposits on the negative electrode current collector. Such a lithium secondary battery is sometimes called a lithium-metal secondary battery.

In a lithium secondary battery, for example, 70% or more of the rated capacity develops through deposition and dissolution of lithium metal. The electron migration at the negative electrode during charging and during discharging is mainly due to the deposition and dissolution of lithium metal at the negative electrode. Specifically, 70 to 100% (e.g., 80 to 100% or 90 to 100%) of the electron migration (in another aspect, current flow) at the negative electrode during charging and during discharging is due to the deposition and dissolution of lithium metal. That is, the negative electrode in the lithium secondary battery differs from a negative electrode in which the electron migration at the negative electrode during charging and during discharging is mainly due to the absorption and release of lithium ions into and from the negative electrode active material (e.g., graphite).

The positive electrode, the negative electrode, the separator, and the spacer are sometimes collectively referred to as an "electrode group". The positive electrode and the negative electrode may be wound, with the separator and the spacer disposed therebetween, constituting an electrode group. When forming a wound electrode group, a belt-shaped positive electrode, a belt-shaped negative electrode, and a belt-shaped separator are used. Alternatively, the positive electrode, the negative electrode, the separator, and the spacer may be stacked together. That is, the electrode group may be a wound electrode group or a stacked electrode group. In the following, the wound electrode group will be mainly described.

### (Spacer)

The spacer is arranged between at least one of the positive electrode and the negative electrode, and the separator. The spacer has a plurality of linear portions. Typically, a pair of linear portions face each other across the positive electrode or the negative electrode.

The spacer may be formed on at least one of a surface of the positive electrode, a surface of the negative electrode, and a surface of the separator. The spacer may be formed on one surface or both surfaces of the negative electrode, or on one or both surfaces of the positive electrode.

In particular, the spacer is preferably formed on a surface of the separator from the viewpoint of the manufacturing process (esp., the manufacturing process of wound electrode group). The spacer may be formed on both surfaces of the separator, but may be formed only on one surface of the separator (i.e., the surface on the negative electrode side or the positive electrode side).

The separator has an elongated shape having a length L1 in a first direction D1 and a length L2 in a second direction D2, where L1 > L2. The separator constituting the wound electrode group may be belt-shaped, with the first direction D1 being the longitudinal direction.

In a lithium secondary battery, the major role of the spacer is to form a space in which lithium metal deposits. Lithium metal is accommodated in the space ensured between the separator and the electrode by the spacer, and thus, the expansion of the negative electrode during charging is suppressed.

On the other hand, it has been revealed that the spacer also plays a role to control the heat transfer path within the battery. For example, in the event when the battery is misused and reaches thermal runaway, an exothermic reaction may occur within the battery, generating gas and causing an increase in internal pressure. In such a case, it is desired to reduce the heat generation rate and the gas generation rate as much as possible. To achieve this, it is effective to suppress the propagation of the exothermic reaction in the first direction (D1) of the separator with an elongated shape.

In order to suppress the propagation of the exothermic reaction in the first direction (D1) of the separator with an elongated shape, it is effective to tilt the direction in which a plurality of linear portions constituting the spacer, by a sufficient angle with respect to the first direction (D1) of the separator. Specifically, when an angle θ of each of the plurality of linear portions with respect to the first direction (D1), where θ ≤ π/2, satisfies θ ≥ tan⁻¹(L2/L1), the propagation of the exothermic reaction in the first direction (D1) is inhibited. As a result, the heat generation rate and gas generation rate are reduced. Furthermore, the gas generated within the battery can easily move in the lateral direction (D2). This allows the safety valve to be activated quickly, to suppress the heat retention within the battery. Thus, high safety is ensured.

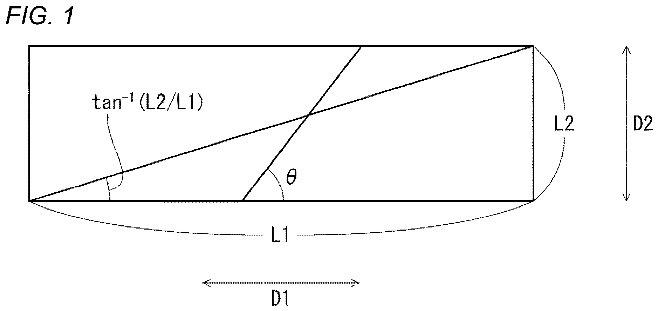

FIG. 1 shows a separator with an elongated shape having a length L1 in the first direction D1 and a length (width) L2 in the second direction D2 perpendicular to the first direction, where L1 > L2, and the relationship between the angle θ of a plurality of linear portions (only one linear portion is shown in FIG. 1) with respect to the first direction (D1), where θ ≤ π/2, and tan⁻¹(L2/L1).

The angle θ of each of the plurality of linear portions with respect to the first direction (D1), where 0 ≤ π/2, may satisfy θ ≥ tan⁻¹(1.4×L2/L1) or θ ≥ tan⁻¹(3×L2/L1). Furthermore, the angle θ may satisfy θ ≥ π/4. In other words, the angle θ of each of the plurality of linear portions with respect to the first direction (D1), where θ ≤ π/2, may be 45° or more, and may be, for example, 60° or more. From the viewpoint of ensuring a sufficient space for lithium metal to deposit, the angle θ is preferably less than 90°, and may be 80° or less. By adopting such an angle θ, the phenomenon in which the spacers get stuck into the space is suppressed, so that a sufficient space is likely to be ensured between the separator and the electrode.

The larger the length L1 of the separator relative to the width L2 is, the more the propagation of the exothermic reaction in the first direction (D1) tends to occur. In other words, the safety-enhancing effect obtained by satisfying θ ≥ tan⁻¹(L2/L1) is exerted more remarkably as the L1/L2 increases (i.e., as the tan⁻¹(L2/L1) increases). Specifically, the L1/L2 satisfies, for example, L1/L2 ≥ 1.4.

In one embodiment, the plurality of linear portions are each formed in the form of a straight line (more specifically, in the form of a line segment) along a direction regulated by the angle θ.

It is desirable that the plurality of linear portions are formed along a plurality of independent straight lines (line segments) not intersecting with each other. The plurality of independent straight lines not intersecting with each other are straight lines including "imaginary line segments" set on a surface of the separator or electrode. The imaginary line segments are planned lines for the bases on which the linear portions are formed, and are parallel to each other.

A length L of the imaginary line segment may satisfy L×sinθ ≥ 0.8×L2. In this case, the plurality of linear portions can each extend along almost all the way from one end to the other end of the separator in the lateral direction (D2). This makes it easy to ensure a space formed by the plurality of linear portions between the separator and the electrode.

The plurality of straight lines (imaginary line segments) may be parallel to each other (i.e., in a stripe shape). Such a plurality of linear portions can be easily uniformly arranged between the separator and the electrode.

At least some of the linear portions may be intermittently formed along the imaginary line segments. That is, the linear portions may be partially missing. The linear portions which are partially missing can be, for example, in a stripe shape when viewed as a whole, and can be uniformly arranged between the separator and the electrode. The missing portions increase the flowability of the nonaqueous electrolyte in the first direction (D1) and improve the lithium ion conductivity. Thus, the reaction resistance can be reduced.

Even when at least some of the linear portions are intermittently formed, it is desirable that any straight line in the first direction (D1) can be drawn so as to cross the linear portions by the number equal to or greater than an integer closest to 0.2×N, where N is a total number of the plurality of line segments. From the viewpoint of arranging the plurality of linear portions more uniformly between the separator and the electrode and from the viewpoint of inhibiting the propagation of the exothermic reaction in the first direction (D1), it is more desirable that any straight line in the first direction (D1) can be drawn so as to cross the linear portions equal to or greater than an integer closest to 0.5×N.

Furthermore, it is desirable that at least some of the missing portions of the linear portions adjacent to each other in the first direction (D1) are not overlapped with each other in the first direction (D1). In this case, because of no overlapping between the missing portions, the flowability of the nonaqueous electrolyte can be increased, and thus the lithium ion conductivity can be improved, while the propagation of the exothermic reaction in the first direction (D1) can be inhibited.

When at least some of the plurality of linear portions are intermittently formed along imaginary line segments, the sum of the lengths of the plurality of linear portions may be 80% or more of the sum of the lengths of the plurality of imaginary line segments set on a surface of the separator or electrode. In this case, the plurality of linear portions are more uniformly arranged between the separator and the electrode, and the space between the separator and the electrode can be more easily secured.

The plurality of straight lines may have a periodic pattern. The periodic pattern is not necessarily of a stripe shape. Such a plurality of linear portions are likely to be uniformly arranged between the separator and the electrode.

From the viewpoint of arranging the plurality of linear portions more uniformly between the separator and the electrode, the interval between any pair of the linear portions adjacent to each other in the first direction may be L1/15 or less, where L1 is the length in the first direction (longitudinal direction) (D1) of the separator. In the separator with an elongated shape in which L1 is larger than L2, by setting the interval between any pair of the linear portions adjacent to each other in the first direction to L1/25 or less, the plurality of linear portions can be arranged more uniformly.

Likewise, from the viewpoint of arranging the plurality of linear portions uniformly, it is desirable that, within a circle of radius Lx having a center at an end of any of the linear portions of length Lx, at least part of another linear portion is included.

The plurality of linear portions may each have an average thickness of 20 µm or more. The thickness of the linear portion refers to the maximum dimension (maximum thickness) in the direction which is perpendicular to the length direction of the linear portion and is parallel to the thickness direction of the separator. The average thickness of the linear portion may be determined by measuring the maximum thickness at any five or more points of the linear portions, and calculating an arithmetic mean value of the five or more measured values.

The plurality of linear portions may each have an average width of 50 µm or more and 1000 µm or less. The width of the linear portion refers to the dimension in the direction which is perpendicular to the length direction of the linear portion and is parallel to a principal surface of the separator. The average width of the linear portion may be determined by measuring the width at any five or more points of the linear portions, and calculating an arithmetic mean value of the five or more measured values.

The maximum thickness and width of the linear portion may be measured by photographing a cross section of the linear portion parallel to the thickness direction of the separator and the top surface of the linear portion, with a scanning electron microscope (SEM).

On each of both surfaces of the separator, an A region facing the spacer and a B region not facing the spacer are present. On each surface, an area ratio of the A region to the total of the A region and the B region may be, for example, 20% or less, may be 10% or less, and may be 5% or less. In this case, the internal resistance can be controlled within a small range. On each surface, the area ratio (coverage rate) of the A region to the total of the A region and the B region may be 2% or more.

The spacer may be formed by, for example, applying a liquid dispersion containing a spacer material onto a surface of the separator or a surface of the electrode, followed by drying. In this case, the linear portions constituting the spacer can be bound with sufficient strength onto the surface of the separator or the surface of the electrode.

The linear portions may contain an inorganic filler. The inorganic filler may be insulating particles. The linear portions may contain a resin material. The resin material may contain a binder resin and a thickener. The binder resin is a resin that binds the inorganic filler particles to each other and binds the linear portions onto a surface of the separator or the electrode. The resin material has excellent insulating properties, and also has excellent moldability. The thickener is a resin that imparts viscosity to the liquid dispersion used in forming the linear portions. The linear portions may contain a resin material and an inorganic filler.

The spacer (linear portions) is formed, for example, using a liquid dispersion containing insulating particles, a binder resin, and a thickener. The spacer formed from the liquid dispersion contains insulating particles, a binder resin, and a thickener.

The dispersion medium of the liquid dispersion may be, without particularly limited thereto, for example, water, an organic solvent, or a mixture of water and an organic solvent. As the organic solvent, for example, N-methyl-2-pyrrolidone (NMP) can be used. In particular, it is desirable to use water in terms of reducing the load on environmental.

The volume resistivity of the insulating particles may be, for example, 1.0×10⁸ Ω·cm or more. When the insulating particles have sufficient electrical insulation properties, lithium metal hardly deposits on the spacer, and the deposition of lithium metal in the intended space is facilitated. The volume resistivity of the insulating particles may be even higher, and may be, for example, 1.0×10¹⁰ Ω·cm or more.

The volume resistivity can be measured by a four-probe method. For example, measurement may be performed, under application of a pressure of 204 Kgf/cm² to the insulating particle, with a powder resistivity meter (e.g., Loresta SP, available from Nitto Seiko Analytech Co., Ltd.).

The insulating particles may be inorganic particles, such as those of a metal oxide, a metal hydroxide, a metal nitride, a metal carbide, and a metal sulfide. Examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, alumina, silica, titania, and the like are preferably used.

The content ratio of the insulating particles in the spacer is, for example, less than 80 vol%, and desirably 50 to 70 vol%. The content ratio (volume ratio) of the insulating particles in the spacer may be determined by observing a cross section of the spacer with a transmission electron microscope (TEM), to obtain a TEM image, and calculate a total area surrounded by the contours of the insulating particles in any 10 µm² field of view, to determine the volume ratio as a ratio of the calculated total area to the area of the field of view. In this case, it is desirable to determine the volume ratios in three or more fields of view, and calculate an average value thereof.

The binder resin may be, for example, a fluorocarbon resin, a fluorocarbon rubber, a styrene-butadiene copolymer or a hydrogenated product thereof, an acrylonitrile-butadiene copolymer or a hydrogenated product thereof, a methacrylic acid ester-acrylic acid ester copolymer, a styrene-acrylic acid ester copolymer, an acrylonitrile-acrylic acid ester copolymer, an ethylene propylene rubber, a polyphenylene ether, a polysulfone, a polyethersulfone, a polyphenylene sulfide, a polyether imide, a polyimide, a polyamide such as a wholly-aromatic polyamide (aramid), a polyimide, a polyamide imide, a polyacrylonitrile, a polyether, a polyolefin, an alkyd resin, and the like.

The amount of the binder resin per 100 parts by volume of the insulating particles may be, for example, 20 to 80 parts by volume, may be 20 to 70 parts by volume, may be 20 to 50 parts by volume, and may be 25 to 40 parts by volume. Within this range, the mechanical strength of the spacer can be easily enhanced, and the bonding strength between the separator and the spacer is likely to be enhanced.

The thickener may include, for example, at least one selected from the group consisting of carboxymethyl cellulose and a carboxymethyl cellulose salt (hereinafter, at least one selected from the group consisting of carboxymethyl cellulose and a carboxymethyl cellulose salt is sometimes referred to as "CMC"). When a carboxymethyl cellulose salt is used as the CMC, examples thereof that can be used include a sodium salt, a lithium salt, a potassium salt, and an ammonium salt. In particular, the carboxymethyl cellulose salt desirably includes a sodium salt.

To fully utilize the role of the CMC, it is desirable that the dispersion medium of the liquid dispersion of the spacer material contains water. Specifically, 50 mass% or more of the dispersion medium may be water, and 70 mass% or more, 80 mass% or more, or 90 mass% or more of the dispersion medium may be water.

The amount of the CMC per 100 parts by volume of insulating particles may be, for example, 0.5 to 5 parts by volume, and may be 1 to 3 parts by volume. By using the CMC within this range, it is possible to allow the CMC to exert its sufficient thickening effect.

### <Separator>

For the separator, a porous sheet having ion permeability and electrically insulating properties is used. Examples of the porous sheet include a microporous thin film, a woven fabric, and a nonwoven fabric. The material of the porous sheet is not particularly limited, and may be a polymer material. Examples of the polymer material include an olefin resin, a polyamide resin, and cellulose. Examples of the olefin resin include polyethylene, polypropylene, and a copolymer of ethylene and propylene. The porous sheet may contain an additive, as necessary. Examples of the additive include an inorganic filler.

The thickness of the separator is, although not particularly limited to, for example, 5 µm or more and 20 µm or less, and more preferably 10 µm to 20 µm.

The separator may include a porous sheet and a composite material layer. The composite material layer may be formed on one principal surface of the porous sheet, and may be formed on both principal surfaces thereof. The composite material layer is a layer that is permeable to lithium ions. The thickness of the composite material layer may be 5% to 50% of the overall thickness of the separator.

The composite material layer contains a resin material and inorganic particles. The inorganic particles may include first particles and/or second particles. The first particles are lithium-containing particles of a phosphoric acid salt. The first particles have an effect of suppressing the heat generation in the battery during abnormality. The second particles are particles other than the first particles.

When the composite material layer is formed on only one principal surface of the porous sheet, the composite material layer may be provided on a principal surface facing the positive electrode of the porous sheet. By arranging the composite material layer on the positive electrode side, the deterioration of the porous sheet due to oxidation reaction can be suppressed. On the other hand, by arranging the composite material layer on the negative electrode side, the deterioration of the porous sheet due to reduction reaction can be suppressed.

The phosphoric acid salt constituting the first particles may be at least one selected from the group consisting of lithium phosphate (Li₃PO₄), dilithium hydrogen phosphate (Li₂HPO₄), and lithium dihydrogen phosphate (LiH₂PO₄). Among these, lithium phosphate is preferred because it is highly effective in suppressing the heat generation in the battery during abnormality. The median diameter in a volume-based particle size distribution of the first particles may be 0.1 µm to 1.0 µm.

A preferred example of the second particles is particles constituted of an insulating inorganic compound that does not melt or decompose in the event of abnormal heat generation in the battery. Examples of the material of the second particles include an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide and boron carbide. Examples of the sulfide include barium sulfate. Examples of the hydroxide include aluminum hydroxide. The median diameter in a volume-based particle size distribution of the second particles may be 0.2 to 2.0 µm.

The median diameter in a volume-based particle size distribution of the particles can be measured, for example, with a laser diffraction-scattering type particle size distribution analyzer (e.g., Microtrac available from Nikkiso Co., Ltd.). Alternatively, a cross section of the separator may be observed with a transmission electron microscope (TEM), to obtain a TEM image, and, with respect to randomly selected 100 first or second particles, calculate an area surrounded by the contour of each particle, and calculate a diameter of an equivalent circle (perfect circle) having the same area as the calculated area, to determine the median diameter as an average value of the diameters of the 100 equivalent circles.

For the resin material, it is desirable to use a polymer material having higher heat resistance than the material of the porous sheet. Such a polymer material preferably includes at least one selected from the group consisting of an aromatic polyamide, an aromatic polyimide, and an aromatic polyamide imide. These are known as polymer materials with high heat resistance. From the viewpoint of heat resistance, preferred is an aramid, i.e., a meta-aramid (meta-type wholly-aromatic polyamide) and a para-aramid (para-type wholly-aromatic polyamide).

The content ratio of the inorganic particles in the composite material layer may be in the range of 50 mass% to 99 mass% (e.g., in the range of 85 mass% to 99 mass%).

### (Negative electrode)

The negative electrode includes a negative electrode current collector. In a lithium secondary battery, lithium metal deposits on the surface of the negative electrode during charging. Specifically, lithium ions contained in the nonaqueous electrolyte receive electrons on the negative electrode during charging, to be lithium metal, which deposits on the surface of the negative electrode. The lithium metal deposited on the surface of the negative electrode dissolves as lithium ions in the nonaqueous electrolyte during discharging.

The negative electrode may include a lithium ion storage layer (a layer that develops capacity by absorbing and releasing lithium ions into and from the negative electrode active material such as graphite) supported on the negative electrode current collector. In this case, the open circuit potential of the negative electrode at full charge may be 70 mV or less relative to lithium metal (lithium dissolution/deposition potential). When the open circuit potential of the negative electrode at full charge is 70 mV or less relative to lithium metal, lithium metal is present on the surface of the lithium ion storage layer at full charge. That is, the negative electrode develops capacity through deposition and dissolution of lithium metal.

Here, "at full charge" means a state in which the battery is charged to, for example, a charged state of 0.98×C or more, where C is the rated capacity of the battery. The open-circuit potential of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), non-graphitizable carbon (hard carbon), and the like can be used.

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

The negative electrode current collector may be a conductive sheet. As the conductive sheet, a foil, a film, and like are used.

The material of the negative electrode current collector (conductive sheet) may be a conductive material other than lithium metal and lithium alloy. The conductive material may be a metal material, such as a metal and an alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, or graphite having a basal plane predominately exposed on its surface. Examples of the alloy include copper alloy and stainless steel (SUS). In particular, copper and/or copper alloy that have high electrical conductivity are preferred.

The thickness of the negative electrode current collector is not particularly limited, and is, for example, 5 µm or more and 300 µm or less.

### (Positive electrode)

The positive electrode includes, for example, a positive electrode current collector, and a positive electrode mixture layer supported by the positive electrode current collector. The positive electrode mixture layer contains, for example, a positive electrode active material, a conductive material, and a binder. The positive electrode mixture layer may be formed on only one surface or on both surfaces of the positive electrode current collector. The positive electrode can be obtained by, for example, applying a positive electrode mixture slurry containing a positive electrode active material, a conductive material, and a binder, onto both surfaces of the positive electrode current collector, and drying the applied films, followed by rolling.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released in the form of lithium ions from the positive electrode during charging, and deposits in the form of lithium metal on the negative electrode or the negative electrode current collector. During discharging, the lithium metal dissolves from the negative electrode to release lithium ions, which are absorbed into the composite oxide of the positive electrode. That is, lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Co, Ni, and/or Mn. The lithium-containing transition metal oxide can contain one or more kinds of typical elements, as necessary. Examples of the typical element include Mg, Al, Ca, Zn, Ga, Ge, Sn, Sb, Pb, and Bi. The typical element may be Al, and the like.

Among the lithium-containing transition metal oxides, a composite oxide containing Co, Ni and/or Mn as transition metal elements and optionally containing Al, and having a layered rock-salt type crystal structure is preferred for achieving high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive agent, and the like, for example, those exemplified for the negative electrode can be used. The shape and the thickness of the positive electrode current collector can be selected from the shape and the range of the positive electrode current collector.

Examples of the material of the positive electrode current collector (conductive sheet) include a metal material containing Al, Ti, Fe, or the like. The metal material may be Al, Al alloy, Ti, Ti alloy, Fe alloy, and the like. The Fe alloy may be stainless steel (SUS).

The thickness of the positive electrode current collector is, although not particularly limited to, for example, 5 µm or more and 300 µm or less.

### (Nonaqueous electrolyte)

The nonaqueous electrolyte having lithium ion conductivity may be a liquid electrolyte (electrolyte solution), may be a gel electrolyte, and may be a solid electrolyte. The liquid electrolyte is, for example, an electrolyte solution containing a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ions and anions are produced.

As the anions, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ+₁SO₂)ₓ(CₙF₂ₙ+₁SO₂)_{y}⁻, where m and n are each independently an integer of 0 or 1 or more, x and y are each independently 0, 1, or 2, and satisfy x+y = 2. The oxalate complex anion may contain boron and/or phosphorus. Examples of the oxalate complex anion include bis(oxalate)borate anion, difluoro(oxalate)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing dendritic deposition of lithium metal, the nonaqueous electrolyte preferably contains at least an oxalate complex anion, and in particular, it is desirable to contain an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, and halogen-substituted derivatives thereof. The nonaqueous electrolyte may include these nonaqueous solvents singly or in combination of two or more kinds. Examples of the halogen-substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the nonaqueous electrolyte is, for example, 0.5 mol/L or more and 3.5 mol/L or less. The anion concentration in the nonaqueous electrolyte may be set to 0.5 mol/L or more and 3.5 mol/L or less. The oxalate complex anion concentration in the nonaqueous electrolyte may be set to 0.05 mol/L or more and 1 mol/L or less.

The nonaqueous electrolyte may contain an additive. The additive may form a surface film on the negative electrode. When a surface film derived from the additive is formed on the negative electrode, the dendrite formation and growth can be easily suppressed. Examples of such an additive include vinylene carbonate, FEC, and vinyl ethyl carbonate (VEC).

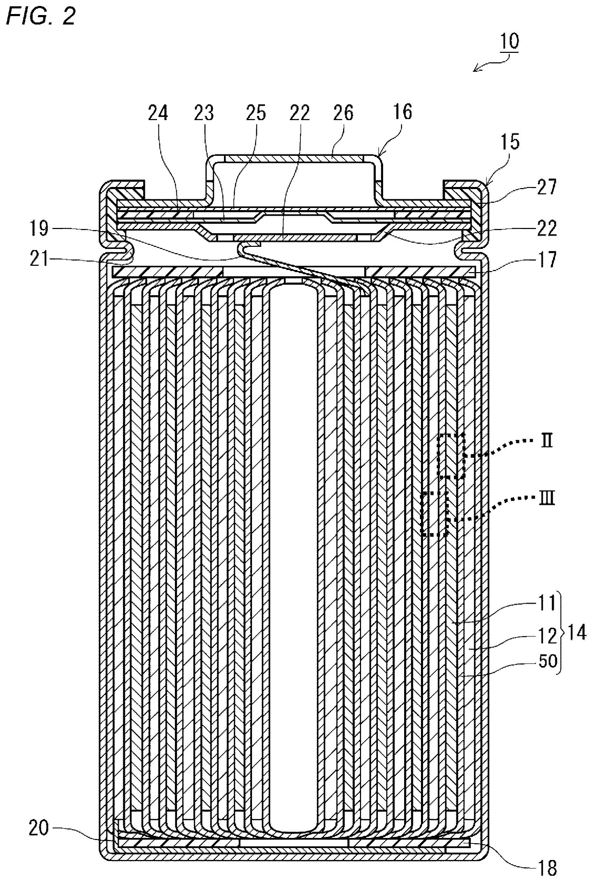

A description will be given below with reference to the drawings. FIG. 2 is a schematic longitudinal sectional view of an example of a lithium secondary battery. To the components of the below-described lithium secondary battery, the components as described above can be applied. The below-described components can be modified based on the description above. In the below-described lithium secondary battery, the components which are not essential to the lithium secondary battery according to the present disclosure may be omitted. In the drawings referred to below, the scale of the components is changed to facilitate understanding.

FIG. 2 is a schematic longitudinal sectional view of an example of a lithium secondary battery according to one embodiment. In FIG. 2, the spacer and the space formed by the spacer are not shown. A cylindrical lithium secondary battery 10 illustrated in FIG. 2 includes a cylindrical battery case, and a wound electrode group 14 and a nonaqueous electrolyte (not shown) housed in the battery case. FIG. 2 corresponds to a longitudinal section including the winding axis of the electrode group 14. The battery case includes a case main body 15, which is a cylindrical metal container with a bottom, and a sealing body 16 sealing the opening of the case main body 15. A gasket 27 is arranged between the case main body 15 and the sealing body 16. The gasket 27 ensures the hermeticity of the battery case. In the case main body 15, insulating plates 17 and 18 are respectively disposed at both ends of the electrode group 14 in the winding axis direction (first direction).

The case main body 15 has a step portion 21 formed by, for example, partially pressing the sidewall of the case main body 15 from the outside. The step portion 21 may be formed, on the sidewall of the case main body 15, in an annular shape along the circumferential direction of the case main body 15. The sealing body 16 is supported on the opening-side surface of the step portion 21.

The sealing body 16 includes a filter 22, a lower valve body 23, an electrically insulating member 24, an upper valve body 25, and a cap 26. In the sealing body 16, these members are stacked in this order. The sealing body 16 is attached at the opening of the case main body 15 so that the cap 26 is positioned outside the case main body 15 and the filter 22 is positioned inside the case main body 15. Each of the above members constituting the sealing body 16 is, for example, disc-shaped or ring-shaped. The lower valve body 23 and the upper valve body 25 are connected to each other at their respective centers, and an insulating member 24 is interposed between the respective peripheral portions. The filter 22 and the lower valve body 23 are connected to each other at their respective peripheral portions. The upper valve body 25 and the cap 26 are connected to each other at their respective peripheral portions. In other words, the members except the insulating member 24 are electrically connected to each other.

The lower valve body 23 has a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 ruptures, to let the gas escape though an aperture formed in the cap 26.

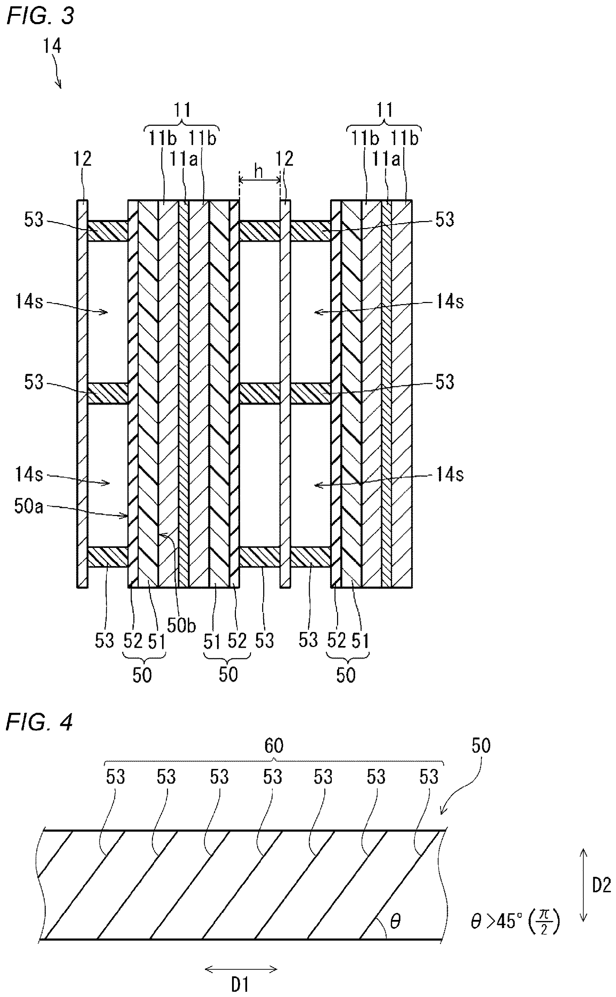

FIG. 3 is a schematic sectional view of part of the lithium secondary battery of FIG. 2. FIG. 3 is a partially enlarged view of a longitudinal section including the winding axis of the electrode group 14. FIG. 3 includes a part in the vicinity of the positive electrode surrounded by a region II in FIG. 2 and a part in the vicinity of the negative electrode surrounded by a region III in FIG. 2.

The electrode group 14 includes a positive electrode 11, a negative electrode 12, a separator 50, and a spacer 60. The spacer 60 is constituted of a plurality of linear portions 53 having a thickness (height) h. The positive electrode 11, the negative electrode 12, and the separator 50 all have an elongated shape (belt-like shape). The positive electrode 11, the negative electrode 12, and the separator 50 are wound together such that the separator 50 is arranged between the positive electrode 11 and the negative electrode 12, into an electrode group 14 having a plurality of turns.

The positive electrode 11 includes a positive electrode current collector 11a, and a positive electrode mixture layer 11b formed on each of both surfaces thereof. The positive electrode current collector 11a is electrically connected, via a positive electrode lead 19, to the cap 26 that functions as a positive electrode terminal.

In FIG. 3, as the negative electrode 12, a negative electrode (negative electrode current collector) without lithium metal deposited thereon is illustrated. The negative electrode 12 is electrically connected, via a negative electrode lead 20, to the case main body 15 that functions as a negative electrode terminal.

Here, the separator 50 includes a porous sheet 51 and a composite material layer 52. The composite material layer 52 is formed, of two principal surfaces of the porous sheet 51, on the principal surface facing the negative electrode 12. The spacer 60 (the plurality of linear portions 53) is formed on the composite material layer 52 of the separator 50, and is in contact with the negative electrode 12. The spacer 60 forms a space 14s between the positive electrode 11 and the negative electrode 12 (between the negative electrode 12 and the separator 50). By the presence of the space 14s, the changes in volume of the electrode group 14 associated with deposition of lithium metal are alleviated during charging, leading to improved cycle characteristics.

FIG. 4 is a plan view of the plurality of linear portions 53 constituting the spacer 60 of the lithium secondary battery as illustrated in FIG. 2. In FIG. 4, the plurality of linear portions 53 are formed along a plurality of straight lines (line segments), each in the form of a straight line. The plurality of linear portions 53 are arranged parallel to each other in a stripe shape in a periodic pattern. The angle θ of each of the plurality of linear portions 53 with respect to the first direction (D1) is θ < π/4 (= 45°).

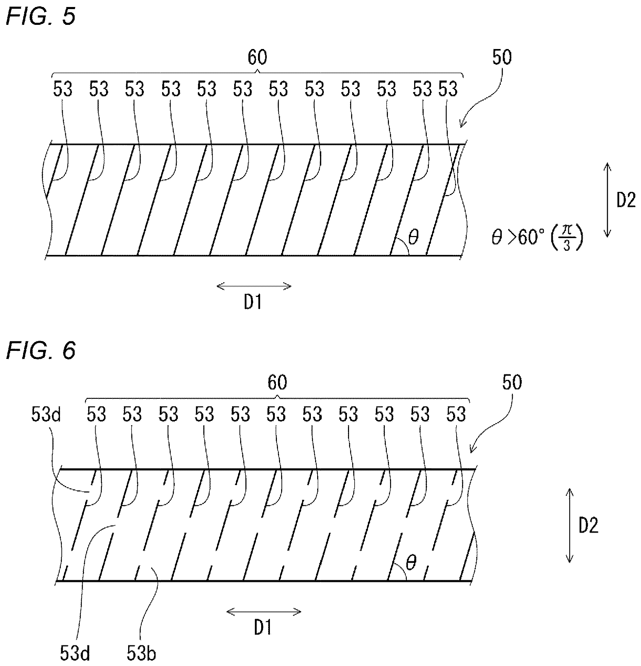

FIG. 5 is a plan view of the plurality of linear portions 53 constituting another spacer. In FIG. 5, the angle θ of each of the plurality of linear portions 53 with respect to the first direction (D1) is θ < π/3 (= 60°).

FIG. 6 is a plan view of the plurality of linear portions 53 constituting another spacer. In FIG. 6, the plurality of linear portions are intermittently formed along imaginary line segments. That is, although partially missing, the linear portions are in a stripe shape when viewed as a whole, and uniformly arranged on the surface of the separator 50. Missing portions 53d of the linear portions 53 adjacent to each other in the first direction (D1) are not overlapped with each other. Therefore, it is possible to improve the flowability of the nonaqueous electrolyte while inhibiting the propagation of the exothermic reaction in the first direction (D1).

The intervals between the linear portions 53 may not necessarily be strictly uniform. In the manufacturing process, there may be a case where the spacer cannot be always provided in a uniform pattern. Even in such a case, it does not matter in particular, as long as the intervals and the angle θ are approximately uniform, as in the illustrated examples.

In the above embodiment, a cylindrical lithium secondary battery including a wound electrode group is described. However, the lithium secondary battery of the present embodiment is not limited to the form of Embodiment 1, and is applicable also to other forms. The shape of the lithium secondary battery can be selected as appropriate from various shapes, such as cylindrical, prismatic, sheet-like, and flat shapes, depending on its use.

### (Supplementary notes)

The above description of embodiments discloses the following techniques.

### (Technique 1)

A lithium secondary battery, comprising
a positive electrode, a negative electrode, a separator, a spacer, and a nonaqueous electrolyte, wherein
the separator is disposed between the positive electrode and the negative electrode,
the spacer is arranged between at least one of the positive electrode and the negative electrode and the separator,
at the negative electrode, lithium metal deposits during charging, and the lithium metal dissolves into the nonaqueous electrolyte during discharging,
the spacer has a plurality of linear portions,
the separator has an elongated shape having a length L1 in a first direction, and a length L2 in a second direction perpendicular to the first direction, where L1 > L2, and
an angle θ of the plurality of linear portions with respect to the first direction, where θ ≤ π/2, satisfies θ ≥ tan⁻¹(L2/L1).

### (Technique 2)

The lithium secondary battery according to technique 1, wherein L1/L2 ≥ 1.4.

### (Technique 3)

The lithium secondary battery according to technique 1 or 2, wherein θ ≥ tan⁻¹(1.4×L2/L1) is satisfied.

### (Technique 4)

The lithium secondary battery according to any one of techniques 1 to 3, wherein θ ≥ tan⁻¹(3×L2/L1) is satisfied.

### (Technique 5)

The lithium secondary battery according to any one of techniques 1 to 4, which the angle θ satisfies θ ≥ π/4.

### (Technique 6)

The lithium secondary battery according to any one of techniques 1 to 5, wherein the plurality of linear portions are formed along a plurality of independent line segments not intersecting with each other.

### (Technique 7)

The lithium secondary battery according to any one of techniques 1 to 6, wherein a length L of the line segments satisfies L×sinθ ≥ 0.8×L2.

### (Technique 8)

The lithium secondary battery according to any one of techniques 1 to 7, wherein the plurality of line segments are parallel to each other.

### (Technique 9)

The lithium secondary battery according to any one of techniques 1 to 8, wherein at least some of the plurality of linear portions are formed intermittently along the line segments.

### (Technique 10)

The lithium secondary battery according to technique 9, wherein any straight line in the first direction can be drawn so as to cross the linear portions equal to or greater than an integer closest to 0.2×N, where N is a total number of the plurality of line segments.

### (Technique 11)

The lithium secondary battery according to technique 9 or 10, wherein at least some of missing portions of the linear portions adjacent to each other in the first direction are not overlapped with each other in the first direction.

### (Technique 12)

The lithium secondary battery according to any one of techniques 9 to 11, wherein a sum of lengths of the plurality of linear portions is 80% or more of a sum of lengths of the plurality of line segments.

### (Technique 13)

The lithium secondary battery according to any one of techniques 1 to 12, wherein
the plurality of line segments have a periodic pattern, and
the plurality of linear portions are uniformly arranged on a surface of the separator.

### (Technique 14)

The lithium secondary battery according to any one of techniques 1 to 13, wherein an interval between any pair of the linear portions adjacent to each other in the first direction is L1/15 or less.

### (Technique 15)

The lithium secondary battery according to any one of techniques 1 to 14, wherein, within a circle of radius Lx having a center at an end of any of the linear portions of length Lx, at least part of another linear portion is included.

### (Technique 16)

The lithium secondary battery according to any one of techniques 1 to 15, wherein the linear portions include a resin material.

### (Technique 17)

The lithium secondary battery according to any one of techniques 1 to 16, wherein the linear portions include an inorganic filler.

### (Technique 18)

The lithium secondary battery according to any one of techniques 1 to 17, wherein the nonaqueous electrolyte includes an oxalate salt.

### (Technique 19)

The lithium secondary battery according to technique 18, wherein the oxalate salt is lithium difluorooxalate borate.

### (Technique 20)

The lithium secondary battery according to any one of techniques 1 to 19, wherein the positive electrode and the negative electrode are wound, with the separator and the spacer interposed between the positive electrode and the negative electrode, constituting an electrode group.

### [Examples]

The lithium secondary battery according to the present disclosure will be more specifically described below with reference to Examples and Comparative Examples. The present disclosure, however, is not limited to the following Examples.

### <<Examples 1 to 3>>

### (1) Production of positive electrode

A layered rock-salt type lithium-containing transition metal oxide (NCA: positive electrode active material) containing Li, Ni, Co, and Al (the molar ratio of Li to the total of Ni, Co, and Al being 1.0), acetylene black (AB; conductive material), and polyvinylidene fluoride (PVdF; binder) were mixed in a mass ratio of NCA:AB:PVdF = 95:2.5:2.5, to which an appropriate amount of N-methyl-2-pyrrolidone (NMP) was further added, and stirred together, to prepare a positive electrode mixture slurry. The resultant positive electrode mixture slurry was applied onto both surfaces of a belt-shaped Al foil (positive electrode current collector), then dried, and the applied films of the positive electrode mixture were rolled using a roller. Lastly, the obtained laminate of the positive electrode current collector and the positive electrode mixture was cut in a predetermined electrode size, to obtain a positive electrode having a positive electrode mixture layer on each of both surfaces of the positive electrode current collector.

### (2) Production of negative electrode

A belt-shaped electrolytic copper foil (thickness 15 µm) was prepared as a negative electrode current collector.

### (3) Separator

A microporous thin film made of polyethylene with a thickness of 20 µm was prepared. The ratio L2/L1 of the length (width) L2 in the second direction D2 to the length L1 in the first direction D1 was 1/9, and the tan⁻¹(L2/L1) was 0.1107, showing that all the Examples satisfied θ ≥ tan⁻¹(3×L2/L1) and satisfied θ ≥ π/4.

### (4) Formation of spacer on principal surface of separator

A liquid dispersion of a spacer material was prepared by mixing 60 parts by volume of insulating particles (median diameter 3 µm, volume resistivity 10¹⁴Ω·cm), 39 parts by volume of alkyd resin serving as a binder resin, 1 part by volume of CMC (sodium salt), and water serving as a dispersion medium.

Next, using a dispenser, the liquid dispersion of the spacer material was dispensed in a predetermined pattern onto one surface of each of a pair of the microporous thin films, and the applied films were vacuum-dried, to form linear portions having a pattern as shown in Table 1. The average thicknesses of the linear portions were set to be all the same at 30 µm, and the average widths thereof were set to be all the same at 250 µm.

The angle θ of each of the plurality of linear portions with respect to the first direction (D1), where 0 ≤ π/2, was changed (45°, 60°, 90°) as shown in Table 1. In each example, the linear portions were uniformly formed in a periodic pattern along a plurality of imaginary line segments (length L = L×sinθ ≥ L2) parallel to each other. The area ratios (coverage rates) of the A region to the total area of the A region facing the spacer and the B region not facing the spacer on the respective surfaces of the separator were set to be the same at 9%.

### (5) Preparation of nonaqueous electrolyte

Ethylene carbonate (EC) and dimethyl carbonate (DMC) were mixed in a volume ratio of EC:DMC = 30:70, and in the resultant mixed solvent, LiPF₆ was dissolved at a concentration of 1 mol/L, and LiBF₂(C₂O₄) was dissolved at a concentration of 0.1 mol/L, respectively, to prepare a liquid nonaqueous electrolyte.

### (6) Assembling of battery

In an inert gas atmosphere, the positive electrode and the negative electrode current collector were wound spirally, with the separator interposed therebetween, to prepare an electrode group. At this time, the separator was placed so that the spacer formed on one side of the separator faced the negative electrode. The electrode group was housed in a bag-shaped outer body formed of a laminate sheet having an Al layer, and after injecting the nonaqueous electrolyte thereinto, the outer body was sealed to complete batteries A1 to A3 of Examples 1 to 3.

### <<Example 4>>

A battery A4 of Example 4 was completed in the same manner as Example 3 in which the angle θ = 60°, where θ ≤ π/2, except that a 0.25-mm missing portion was provided every 2.65 mm of the length of the linear portion. The adjacent missing portions were arranged so as not to overlap each other in the first direction D1.

### <<Comparative Example 1>>

A battery B1 of Comparative Example 1 was completed in the same manner as in the above Examples, except that the plurality of linear portions were formed at θ = 0°.

### [Evaluation]

### (Charge-discharge efficiency)

With respect to the batteries after subjected to break-in charge and discharge, a charge-discharge test was performed in a thermostatic chamber at 25 °C under the following conditions. The rest time between charging and discharging was set to 20 minutes. The ratio of the discharge capacity to the charge capacity was determined as an initial charge-discharge efficiency.

### <Charging>

A constant-current charging was performed at a current of 0.5 mA per unit area (square centimeters) of the electrode until the battery voltage reached 4.2 V, and then, a constant-voltage charging was performed at a voltage of 4.2 V until the current value per unit area of the electrode reached 0.05 mA.

### <Discharging>

A constant-current discharging was performed at a current of 0.5 mA per unit area of the electrode until the battery voltage reached 3.0 V.

### (Heat generation rate)

Each of the batteries A1 to A4 and B1 was charged to 4.2 V at a constant current of 0.5 mA per unit area (square centimeters) of the electrode, and then, inserted into a cylindrical sample container made of SUS304 and heated to 300 °C in the heat-wait-search measurement mode using an ARC tester available from NETZSTH. The temperature rise due to the self-heating of the battery from 110 °C was measured, to calculate heat generation rates of the batteries A1 to A4 and B1 at 190 °C, 200 °C, 210 °C, and 220 °C. The temperature sensor was installed on the surface of the cylindrical sample container.

### (Maximum pressure rate)

A thin tube was connected to the above cylindrical sample container. By connecting a pressure sensor to the tip end of the thin tube, the pressure value in the sample container and the thin tube during the test was measured. The differential value of the measured pressure was calculated, and the maximum value thereof was determined as a maximum pressure rate.

The evaluation results are shown in Table 1, together with the configuration of the spacer.

**[Table 1]**

| | θ | missing portion | charge-discharge efficiency (%) | heat generation rate (°C/min) | | | | maximum pressure rate |
|---|---|---|---|---|---|---|---|---|
| | | | | 190 °C | 200 °C | 210 °C | 220 °C | (MPa/s) |
| B1 | 0° | without | 89 | 1 | 6 | 1364 | 1597 | 38.1 |
| A1 | 45° | without | 89 | 2 | 4 | 770 | 914 | 32.3 |
| A2 | 90° | without | 64 | 2 | 8 | 372 | 499 | 27.1 |
| A3 | 60° | without | 89 | 2 | 5 | 326 | 337 | 31.4 |
| A4 | 60° | with | 89 | 5 | 23 | 411 | 406 | 37.2 |

Table 1 shows that when the angle θ of the linear portions (spacer) with respect to the first direction (D1) corresponding to the longitudinal direction of the separator satisfied θ ≥ tan⁻¹(L2/L1) (specifically, θ ≥ 45° (π/4)), the heat generation rate and the maximum pressure rate at temperatures exceeding 200 °C were significantly suppressed.

### [Industrial Applicability]

The lithium secondary battery according to the present disclosure can be used in electronic devices, such as mobile phones, smartphones, and tablet terminals, electric cars including hybrids and plug-in hybrids, and home storage battery systems combined with a solar cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: : lithium secondary battery
- 11: : positive electrode
- 12: : negative electrode
- 14: : electrode group
- 14s: : space
- 15: : case main body
- 16: : sealing body
- 17, 18: : insulating plate
- 21: : step portion
- 22: : filter
- 23: : lower valve body
- 24: : insulating member
- 25: : upper valve body
- 26: : cap
- 27: : gasket
- 50: : separator
- 51: : porous sheet
- 52: : composite material layer
- 53: : linear portion
- 60: : spacer

## Claims

1. A lithium secondary battery, comprising
a positive electrode, a negative electrode, a separator, a spacer, and a nonaqueous electrolyte, wherein
the separator is disposed between the positive electrode and the negative electrode,
the spacer is arranged between at least one of the positive electrode and the negative electrode and the separator,
at the negative electrode, lithium metal deposits during charging, and the lithium metal dissolves into the nonaqueous electrolyte during discharging,
the spacer has a plurality of linear portions,
the separator has an elongated shape having a length L1 in a first direction, and a length L2 in a second direction perpendicular to the first direction, where L1 > L2, and
an angle θ of the plurality of linear portions with respect to the first direction, where θ ≤ π/2, satisfies θ ≥ tan⁻¹(L2/L1).

2. The lithium secondary battery according to claim 1, wherein L1/L2 ≥ 1.4.

3. The lithium secondary battery according to claim 1, wherein θ ≥ tan⁻¹(1.4×L2/L1) is satisfied.

4. The lithium secondary battery according to claim 1, wherein θ ≥ tan⁻¹(3×L2/L1) is satisfied.

5. The lithium secondary battery according to claim 1, which the angle θ satisfies θ ≥ π/4.

6. The lithium secondary battery according to claim 1, wherein the plurality of linear portions are formed along a plurality of independent line segments not intersecting with each other.

7. The lithium secondary battery according to claim 6, wherein a length L of the line segments satisfies L×sinθ ≥ 0.8×L2.

8. The lithium secondary battery according to claim 6, wherein the plurality of line segments are parallel to each other.

9. The lithium secondary battery according to claim 6, wherein at least some of the plurality of linear portions are formed intermittently along the line segments.

10. The lithium secondary battery according to claim 9, wherein any straight line in the first direction can be drawn so as to cross the linear portions by the number equal to or greater than an integer closest to 0.2×N, where N is a total number of the plurality of line segments.

11. The lithium secondary battery according to claim 9, wherein at least some of missing portions of the linear portions adjacent to each other in the first direction are not overlapped with each other in the first direction.

12. The lithium secondary battery according to claim 9, wherein a sum of lengths of the plurality of linear portions is 80% or more of a sum of lengths of the plurality of line segments.

13. The lithium secondary battery according to any one of claims 1 to 12, wherein
the plurality of line segments have a periodic pattern, and
the plurality of linear portions are uniformly arranged on a surface of the separator.

14. The lithium secondary battery according to claim 13, wherein an interval between any pair of the linear portions adjacent to each other in the first direction is L1/15 or less.

15. The lithium secondary battery according to any one of claims 1 to 12, wherein, within a circle of radius Lx having a center at an end of any of the linear portions of length Lx, at least part of another linear portion is included.

16. The lithium secondary battery according to any one of claims 1 to 12, wherein the linear portions include a resin material.

17. The lithium secondary battery according to claim 16, wherein the linear portions include an inorganic filler.

18. The lithium secondary battery according to any one of claims 1 to 12, wherein the nonaqueous electrolyte includes an oxalate salt.

19. The lithium secondary battery according to claim 18, wherein the oxalate salt is lithium difluorooxalate borate.

20. The lithium secondary battery according to any one of claims 1 to 12, wherein the positive electrode and the negative electrode are wound, with the separator and the spacer interposed between the positive electrode and the negative electrode, constituting an electrode group.
